# EUROPEAN PATENT SPECIFICATION

(11) **EP 0 415 573 B1**
(45) Date of publication and mention of the grant of the patent: **17.11.1994**
(21) Application number: 90308596.7
(22) Date of filing: 03.08.1990
(51) Int. Cl.: G06F 3/033

(54) **Data processing system**
Datenverarbeitungssystem
Système de traitement des données

(30) Priority: 03.08.1989 GB 8900885
(43) Date of publication of application: 06.03.1991
(73) Proprietor: International Business Machines Corporation, Armonk, N.Y. 10504 (US)
(72) Inventor: Vaughton, Matthew Kelvin, Romsey, Hampshire S051 8RL (GB)
(74) Representative: Bailey, Geoffrey Alan

(56) References cited:
- EP-A- 0 176 950
- PROCEEDINGS OF THE 9TH INTERNATIONAL CONFERENCE ON SOFTWARE ENGINEERING,Monterey, California, 30th March - 2nd April 1987, pages 216-224, IEEE ComputerSociety Press, ACM; C. RATHKE: "Human-computer communication meets software engineering"

## Description

This invention relates to the field of data processing systems. More particularly, this invention relates to the user interface of data processing systems.

In the past the use of data processing systems has typically been large centralised systems operated and controlled by a small number of expert users. However, the use of data processing systems has recently undergone dramatic changes in that small data processing systems (e.g. personal computers) are being used as an everyday working tool by users having jobs ranging from the factory floor to senior management.

These new users are not experts in data processing systems and their priority is that the data processing systems should give them the maximum help with their jobs rather than a desire to become experts in data processing systems. Thus, in order to meet the priorities of these new users, the way in which the user interacts with the data processing system should be made easy to learn and simple to work with, i.e. the user interface should be rationalised.

Great strides have been made in improving the user interfaces of data processing systems. One successful approach has been the development of so called 'window driven systems' such as the Presentation Manager feature of the OS/2 systems of International Business Machines Corporation (Presentation Manager and OS/2 are a trademarks of International Business Machines Corporation). A 'windows driven system' is disclosed in EP-A-0 176 950

Such systems provide a number of display areas (windows) whose size, shape and position within the display may be manipulated by the user. Each of these windows presents a different portion of the user interface, i.e. one window may display a menu of program options within a word processing program whilst another displays the text being manipulated by that word processing program.

These windows driven user interfaces have been found to be particularly effective for multitasking data processing systems in which more than one application program is in use at any time, e.g. a word processing program, an electronic mail program, a database program and a graphics program may all be in use at one time. Each of these application programs will have one or more windows by means of which the user interacts with that application. It will be appreciated that the different application programs/tasks are distinct self contained pieces of software such as the application programs listed above. The multitasking system interleaves the execution of the program. Such a mode of operation is quite distinct from the sequential execution of different routines within the same program.

It is a feature of advanced multitasking data processing systems that the tasks executed are becoming more interdependent, i.e. one task may start or call upon another task to carry out some function required by that first task. An example of such interdependence would be one task requiring a particular piece of information to be retrieved from a database by a database retrieval task. The calling task would start the database retrieval task and pass to it details concerning the data required. In prior art systems the calling task would have one set of windows and the called task would have a separated set of windows. In the case of a called database retrieval task its window may provide visual feedback to the user concerning the progress of the search.

Whilst it is desirable to provide this visual feedback, consequential problems do arise. To the non-expert user, the separate window of the called task seems to appear out of nowhere and be unconnected to the window of the calling task. Furthermore, the movement, shrinking or closing of the window of the calling task has no effect on the window of the called task. There is a lack of visual connection between the window(s) of the calling and called tasks. The present invention both recognising and solves this problem.

The invention provides a data processing system having a window based display and a processor executing a plurality of interleaved data processing tasks each having one or more associated display windows, wherein execution of a first task may trigger execution of a second task characterised in that when execution of said first task triggers execution of said second task, said processor uses data identifying said first task's display window(s) and to control display of said second task's display window(s) so as to be connected to and move with said first task's display window(s).

The invention provides the advantage that display of the window(s) of the called task in a manner connected to the window(s) of the calling task, clarifies to the user the relationship between the tasks. Furthermore, the use of the data identifying the calling task's window(s) makes it possible for the system to monitor any changes in the position or size of the calling task's window(s) and make appropriate changes in size and position to the window(s) of the called task thereby preserving the visual relationship between the tasks.

In preferred embodiments of the invention said data includes identification of a portion of memory storing parameters describing said calling task's window(s). This feature of the invention exploits the manner in which prior art systems such as those having the Presentation Manager feature are organised to minimise the amount of data that need be passed between the programs and minimise the modifications that must be made to the system in order to produce a system embodying the invention. In such a system the control of the display of the windows is carried out by the operating system with each task being responsible for the contents of its windows. The result is that the tasks need only identify their windows to one another and then the function of the operating system may be used to display the windows in the desired manner.

In the case of the Presentation Manager systems each program/window has a so called "window handle" associated with it. This window handle acts as a pointer to a memory location within the system where data describing the associated window is stored. Passing the window handle from the calling to called task allows the called task to set up its window(s) as a so called "child window" of the calling tasks window. Once this structure is established the existing operating system will control the display of the windows in the desired manner.

In preferred embodiments of the invention said second task's window(s) is displayed within said first task's window(s). This form of display provides an unmistakable visual link between the windows of the different tasks. It will however be appreciated that other ways of connecting the windows are possible, e.g. the window(s) of the second task may abut the edge of the window(s) of the first task - the windows may be "clipped together" at their edge.

The invention has been found to be particularly advantageous when said system has the function of downloading files from another system required by said first task and said second task's window(s) provides an indication of the progress of said downloading. In this situation there is a strong need for visual feedback as downloading may take some time and it is also possible that more than one task may be downloading files at any one time and so it is important that the windows giving feedback as to the progress of the download be readily associated with the calling task.

An embodiment of the invention will now be described, by way of example only, with reference to the accompanying drawings in which:

Figure 1 schematically illustrates a prior art windowing user interface with windows of calling and called tasks.

Figure 2 schematically illustrates the user interface of an embodiment of the invention.

Figure 3 schematically illustrates a flow diagram for an embodiment of the invention.

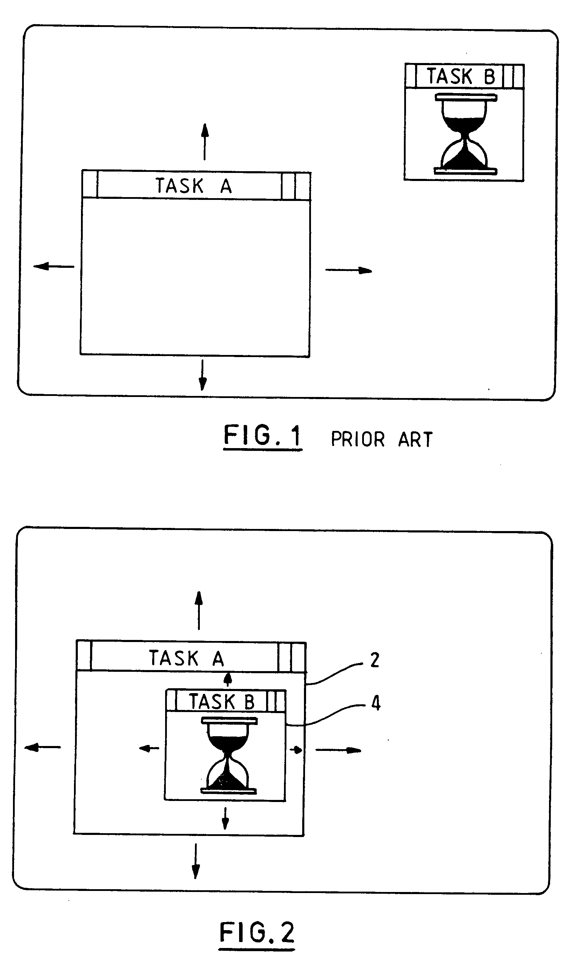

Figure 1 schematically illustrates a display in which Task A calls Task B. Both Task A and Task B have separate windows providing visual feedback to the user. The windows of Task A and Task B are not connected, with the result that movement or changing the size of the window for Task A has no effect on the window for Task B. In the case illustrated, Task B has the function of downloading files from a remote system. The window for Task B shows a sand glass in which the flow of the sand through the sand glass gives an indication of the progress of the downloading of the file in question.

It can be seen that the user interface of Figure 1 suffers from the disadvantage that the window for Task B is not visually connected to the window for Task A and a non-expert user may not be entirely sure what is being monitored by the window for Task B. This problem would be compounded if another program were to concurrently invoke Task B to download a file, since two windows could appear without it being immediately obvious which related to which calling program. Another confusing feature of the prior art is that the window for Task A can be moved or minimised without a corresponding effect on the window for Task B.

Figure 2 schematically illustrates the user interface of an embodiment of the present invention. The window of Task B is displayed within the window of Task A and moves with the window of Task A. The relationship between the windows of the two tasks is immediately visually apparent to the user. As is schematically illustrated in Figure 2 movement of the window for Task A also moves the window for Task B.

The sequence of Programming steps for producing this embodiment of the invention may be represented as follows:
1. Task A puts up a window (2) for Task A
2. Task A calls Task B and passes to Task B the window handle for the window (2) of Task A.
3. Using the window handle for the window (2) of Task A, Task B puts up the window (4) for Task B as a child window of the window (2) of Task A.
4. Task B destroys the window (4) for Task B, when the processing for Task B is completed.
5. Control returns to Task A.

It will be appreciated that the processing for the tasks themselves takes place between the window manipulation steps outlined above.

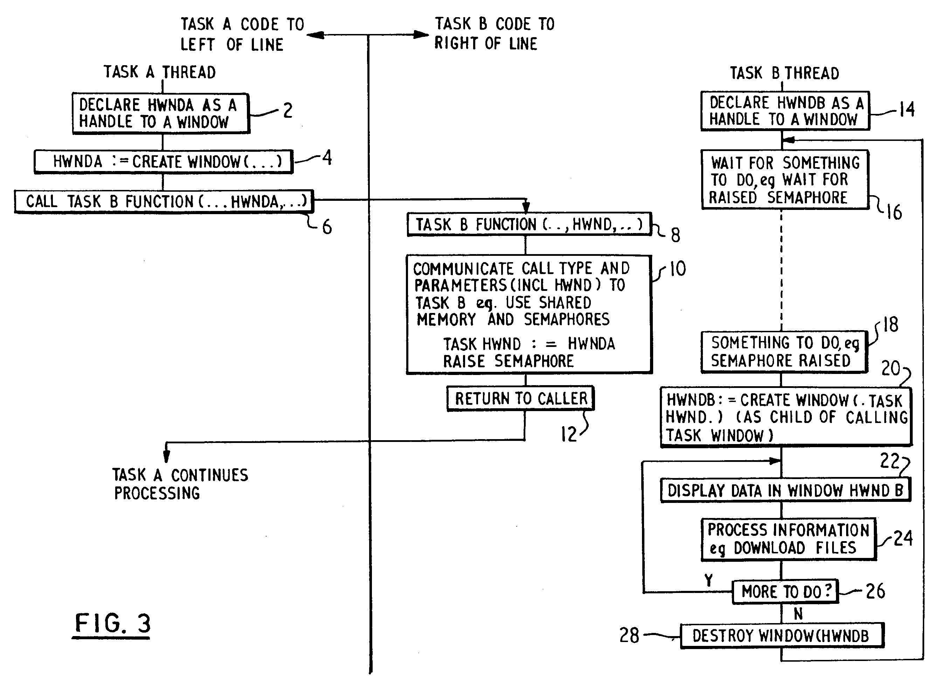

Figure 3 schematically illustrates a flow diagram for an embodiment of the invention. The steps on the left of the flow diagram are part of Task A whilst those on the right of the diagram are part of Task B.

Considering first the flow of control within the system which is associated with Task A. At step 2 Task A choses a window handle - hwndA for the window it wishes to create. At step 4 Task A creates the window by issuing a call to the OS/2 operating system in the known way. At step 6 Task A issues a call triggering the execution of Task B. Included as a parameter within the call is the window handle - hwndA for the window of Task A. Control is then temporarily passed to Task B.

At steps 8 and 10 Task B reads the call and the hwndA using shared memory and raises a semaphore for subsequently triggering the execution of Task B. At step 12 control is returned to Task A which then continues processing.

Task B has previously chosen its window handle at step 14 and has been waiting at step 16 for a semaphore to be raised. Task B is triggered to execute by recognising that the semaphore has been raised at step 18. At step 20 Task B creates its window as a child window of the window for Task A using the standard OS/2 call which requires it to provide the window handle - hwndA for the window of Task A. Task B can read the hwndA form shared memory. At steps 22 and 24 Task B performs its processing function and displays the results in its window. When the processing for Task B has finished (determined by step 26), Task B destroys its window using the know OS/2 call at step 28 and returns to steps 16.

The calls for creating parent and child windows, and destroying windows are well known to OS/2 programmers. The detailed coding for programs running on windowing displays will not be described. There are a number of books and manuals available on this subject such as the IBM manual "OS/2 Version 1.1 Programming Guide" and "Programming the OS/2 Presentation Manager" by Charles Petzold which fully describe how to write programs to operate on windowing displays (IBM and OS/2 are trademarks of International Business Machines Corporation).

The key feature in producing the above described embodiment of the invention is the step of the calling task passing its window handle to the called tasks which then used the window handle to establish its own window as a "child window" of the window of the calling task.

## Claims

1. A data processing system having a window based display and a processor executing a plurality of interleaved data processing tasks each having one or more associated display windows (2), wherein execution of a first task may trigger execution of a second task, characterised in that when execution of said first task triggers execution of said second task, said processor uses data identifying said first task's display window(s) (2) to control display of said second task's display window(s) (4) so as to be connected to and move with said first task's display window(s).

2. A data processing system as claimed in claim 1, wherein said data includes identification of a portion of memory storing parameters describing said first task's display window(s) (2) and said data is made available to said second task.

3. A data processing system as claimed in claims 1 or 2, wherein said first task's window(s) (2) is displayed within said calling second tasks window(s).

4. A data processing system as claimed in claims 1, 2 or 3, wherein said second task has the function of downloading files from another data processing system required by said first task and said second task's window(s) provides an indication of the progress of said downloading.

## Patentansprüche

1. Ein Datenverarbeitungssystem mit einer fenstergestützten Anzeige und einem Prozessor, der mehrere verzahnte Datenverarbeitungs-Tasks ausführt, zu denen jeweils ein oder mehrere Anzeigefenster (2) gehören, wobei die Ausführung eines ersten Tasks die Ausführung eines zweiten Tasks auslösen kann, dadurch gekennzeichnet, daß der Prozessor, wenn die Ausführung des ersten Tasks die Ausführung des zweiten Tasks auslöst, Daten verwendet, die das (bzw. die) Anzeigefenster (2) des ersten Tasks bezeichnen, um die Anzeige des Anzeigefensters (bzw. der Anzeigefenster) (4) des zweiten Tasks zu steuern, so daß dieses mit dem Anzeigefenster (bzw. den Anzeigefenstern) des ersten Tasks verbunden ist und sich mit ihm (bzw. ihnen) bewegt.

2. Ein Datenverarbeitungssystem nach Anspruch 1, bei dem die Daten die Bezeichnung eines Speicherabschnitts umfassen, in dem Parameter gespeichert sind, die das (bzw. die) Anzeigefenster (2) des ersten Tasks beschreiben, und diese Daten dem zweiten Task zur Verfügung gestellt werden.

3. Ein Datenverarbeitungssystem nach Anspruch 1 oder 2, bei dem das Anzeigefenster (2) des ersten Tasks innerhalb des Fensters (bzw. der Fenster) des aufrufenden zweiten Tasks angezeigt wird.

4. Ein Datenverarbeitungssystem nach Anspruch 1, 2 oder 3, bei dem der zweite Task die Funktion hat, Dateien, die von dem ersten Task benötigt werden, von einem anderen Datenverarbeitungssystem herunterzuladen, und das (bzw. die) Fenster des zweiten Tasks einen Hinweis auf den Fortgang des Herunterladens gibt.

## Revendications

1. Système de traitement de données comportant un affichage à fenêtres et un processeur exécutant une pluralité de tâches de traitement de données imbriquées, chacune ayant une ou plusieurs fenêtres d'affichage associées (2, 4), dans lequel l'exécution de la première tâche peut déclencher l'exécution de la seconde tâche, ledit processeur utilisant les données identifiant les fenêtres d'affichage de ladite première tâche (2) pour contrôler l'affichage des fenêtres d'affichage de ladite seconde tâche (4) de façon à être connecté et à se mouvoir avec les fenêtres d'affichage de ladite première tâche.

2. Système de traitement de données tel que revendiqué dans la revendication 1, dans lequel lesdites données comprennent l'identification d'une portion de mémoire emmagasinant les paramètres décrivant les fenêtres d'affichage de ladite première tâche (2) et lesdites données sont rendues disponibles à ladite seconde tâche.

3. Système de traitement de données tel que revendiqué dans la revendication 1 ou 2, dans lequel les fenêtres de ladite première tâche (2) sont affichées à l'intérieur de ladite seconde tâche appelante.

4. Système de traitement de données tel que revendiqué dans la revendication 1, 2 ou 3, dans lequel ladite seconde tâche a la fonction de charger des fichiers provenant d'un autre système de traitement de données nécessaires à ladite première tâche et les fenêtres de ladite seconde tâche fournissent une indication de la progression dudit chargement.
